**Europäisches Patentamt**

(19) **European Patent Office**

**Office européen des brevets**

(11) Publication number : **0 384 908 B1**

(12) **EUROPEAN PATENT SPECIFICATION**

(45) Date of publication of patent specification : 01.09.93 Bulletin 93/35

(51) Int. Cl.⁵ : **A61C 13/083**

(21) Application number : **90850070.5**

(22) Date of filing : **16.02.90**

(54) **Method for producing a ceramic unit.**

(30) Priority : **23.02.89 SE 8900620**

(43) Date of publication of application : **29.08.90 Bulletin 90/35**

(45) Publication of the grant of the patent : **01.09.93 Bulletin 93/35**

(84) Designated Contracting States : **AT BE CH DE DK ES FR GB GR IT LI LU NL SE**

(56) References cited :
**EP-A- 0 030 850**
**EP-A- 0 107 476**
**FR-A- 449 796**
**US-A- 3 880 971**

(73) Proprietor : **Nobelpharma AB**
**Box 5190**
**S-402 26 Göteborg (SE)**

(72) Inventor : **Andersson, Matts**
**Fack 45**
**S-830 22 Faker (SE)**

(74) Representative : **Falk, Bengt**
**Bofors AB, Patents and Trademarks**
**S-691 80 Karlskoga (SE)**

## Description

TECHNICAL FIELD

The present invention relates to a method for producing a unit which consists of ceramic material and is designed to replace lost substance or tissue in the human body. The method is based on transferring a contour from a preparation model to a tool.

PRIOR ART

Various methods are already known for replacing lost substance, for example tooth substance, or tissue with a unit made of ceramic material. In this respect the replacement may be complete in so-called crown treatment or partial in so-called filling treatment. Ceramic material is preferable for many reasons. Among other things, it has a high degree of biocompatibility and affords the possibility of a natural reproduction of colour, lustre and appearance. In addition, it has very good resistance to various attacking factors.

DESCRIPTION OF THE INVENTION

TECHNICAL PROBLEM

The ceramic units (articles) which are available today in this field have the great disadvantage that they are not sufficiently strong, but instead easily break during use. Flexural strength has in particular proven difficult to satisfy. In addition, the methods by which the unit is produced are based on essentially manual procedures which require great craftsmanship. The ceramic units must in most cases be produced with great accuracy, for example an accuracy of 0.01 mm or less.

It is previously known - see EP-A-0 107 476 to form ceramic bone grafts or the like in a mold cavity with a configuration similar to the portion of the bone which the graft is intended to replace.

It is not disclosed, however, how to produce ceramic units having a contour which corresponds to the lost substance contour with great accuracy, such as dental crown replacements or the like.

SOLUTION

The aim of the present invention is to provide a method for producing a ceramic unit, which method solves one or more of the problems mentioned. The features which can principally be regarded as essential to the invention are that both the preparation model and the blank from which a tool part is made are positioned in a copying machine having a detecting member for sensing the contour of the model and transferring said contour in a linearly enlarged state to said blank, that a tool part is formed in said copying machine from the blank which tool part has a contour corresponding to said linearly enlarged contour, that a ceramic starting material is applied and compacted on said linearly enlarged contour. The unit produced in this way is then removed and treated in one or more sintering procedures, in which respect linear shrinking is carried out until the contour defined by the tool part has essentially the same size as the model contour. In one embodiment a mould cavity is formed with the tool part. The starting material is applied in the cavity and is subjected there to compressive force.

In a preferred embodiment two different sintering stages are used, a pre-sintering procedure and a final sintering procedure. After the pre-sintering the article is given a desired outer form by machining, for example by grinding. After the final sintering the article is individualized, for example by means of applying porcelain to the article and firing it to the desired outer contour and colour.

In one proposed embodiment the model contour in question is enlarged by between 16 and 25%, preferably about 20%, and by means of the said sintering procedures the article is shrunk by a corresponding percentage. The ceramic starting material introduced into the mould cavity is pressed isostatically or automatically with a high compressive force, for example of about 2000 MPa (about 200 kp/mm$^2$). The pre-sintering is carried out at a temperature of 800-1300°C, while the final sintering is carried out at a temperature of 1100-1600°C.

ADVANTAGES

The above proposals provide a method which permits economical production of individually shaped wholly ceramic units/articles with considerably higher strength characteristics, in particular higher flexural strength characteristics, than today's ceramic units/articles. To give an example, the new articles withstand tensile stresses of an order of magnitude which is 3-4 times higher than is possible to achieve with today's articles and methods.

The new method makes it possible to produce, in an economical manner, individual ceramic units for attachment to prepared underlays. By linearly enlarging the model of the prepared underlay and by allowing the enlarged replica (tool/tool part) to be the starting model for the subsequent production, it is possible to achieve complete or very long sintering of the ceramic unit, which affords the better flexural strength characteristics mentioned. This has not been possible hitherto.

DESCRIPTION OF FIGURES

A proposed embodiment of a method for producing a ceramic unit will be described below with reference to the attached drawings, in which

Figure 1 shows a vertical view of a used model in relation to the linear enlargement which is to be transferred to a press tool part,

Figure 2 shows, in vertical section, parts of the press tool comprising, on the one hand, the press tool part with the enlarged contour and, on the other hand, a mould cavity defined by the press tool part,

Figure 3 shows, in vertical section and in principle, the sintering procedure for the ceramic unit,

Figure 4 shows, in vertical section, the machining of the outer contour of a unit produced and enlarged in the press tool, and

Figure 5 shows a horizontal view of a copying machine by means of which the shape/contour of the model can be transferred linearly enlarged to the press tool part.

PREFERRED EMBODIMENT

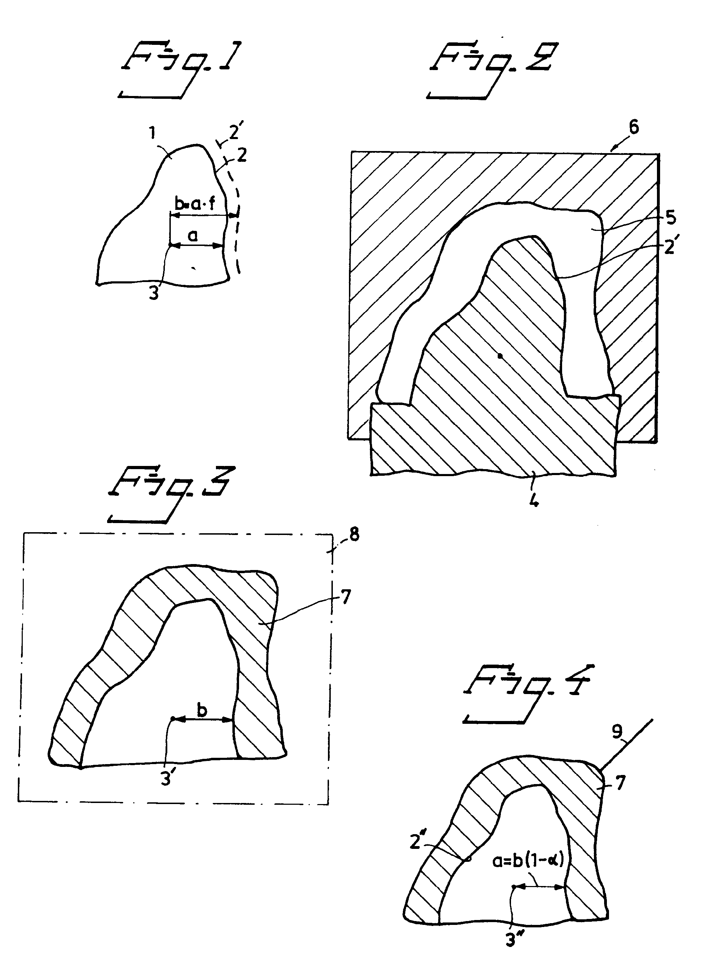

Figure 1 shows a starting model (preparation model) 1 with a contour 2 (for example outer contour) to which the produced unit (in the present case the cap) is to be matched with great accuracy, for example 0.01 mm or less. The centre of gravity of the article is indicated by 3 and a given distance from the contour 2 is indicated by a. The linear enlargement f which is to be made of the model contour 2 according to the invention means that the distance b, which relates to the distance a in the enlarged state, will have the value according to the equation:

$$b = a \cdot f$$

in which f = the enlargement factor.

This enlargement relationship applies to all distances between the centre of gravity 3 and the contour 2.

In accordance with what is stated below, the linearly enlarged contour 2' is transferred to a press tool part 4 which defines a mould cavity 5 in a press tool 6. Ceramic starting material, for example aluminium oxide, is applied in the cavity and is compressed at high pressure, for example 2000 MPa. Pressing procedures which are known per se can be used in this case, for example isostatic pressing or automatic pressing. Alternatively, slip casting, die casting, injection moulding or another compacting method can be used.

The unit 7 thus produced is released or removed from the tool and is pre-sintered in a furnace 8 at about 800 - 1300°C. The article 7 is then machined to the desired outer shape. The machining can be carried out manually, for example using a grinding machine 9 or another machining device (for example laser). After machining, final sintering is carried out in the furnace 8 at a temperature of 1100 - 1600 °C. The sintering procedure/sintering procedures is/are known per se and is/are of the type in which the shrinking of the unit is controlled exactly so as to give a dimension in which the outer contour 2" matches with a high degree of precision the size and shape of the contour 2 of the model 1. After checking, the unit/hood/cap can be individualized by firing conventional porcelain (dental porcelain) in a known manner to give the correct outer contour and correct colour.

Figure 3 shows the enlarged distance b between the centre of gravity 3' and the relevant point on the inner surface of the unit 7. In Figure 4 the shrunk distance a between the centre of gravity 3" and the relevant point on the inner wall is obtained as follows:

$$a = b (1 - \alpha)$$

in which $\alpha$ = the shrinkage factor.

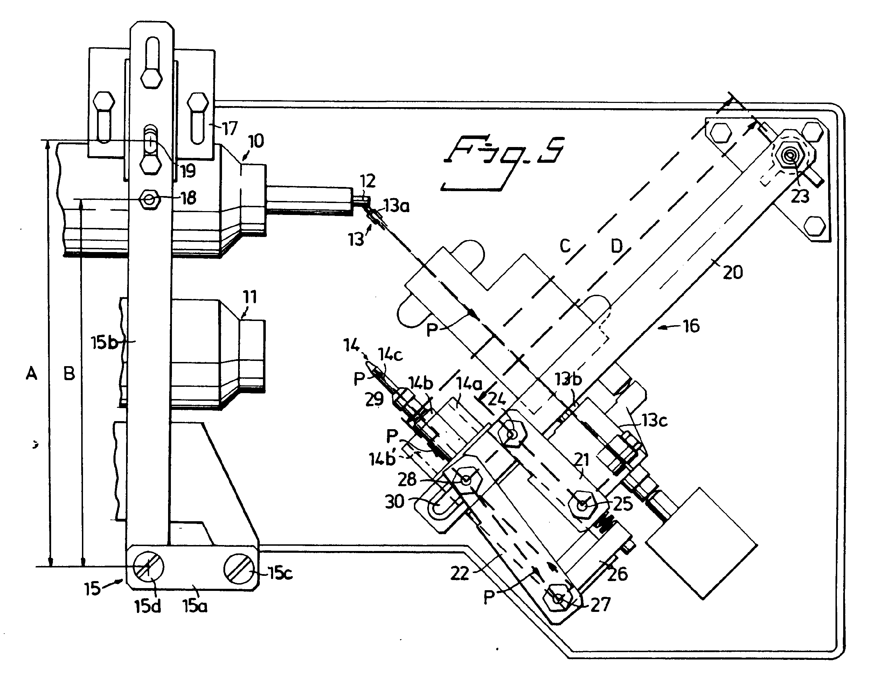

The production of the tool part with simultaneous transfer of the model contour 2 in a linearly enlarged state 2' can be achieved by using a modified embodiment of the copying machine according to Swedish patent 8601870-2. The modified parts of the machine emerge from Figure 5. In the known machine, a pair of first and second units 10 and 11, respectively, are rotatably arranged in a housing which is arranged displaceable in the longitudinal direction of the units. The first unit 10 supports the model 1 and the second unit 11 supports in a corresponding manner a blank (not shown in Figure 5) from which the tool part 4 (see Figure 2) is to be produced. The copying machine also comprises a second pair of units, here referred to as the third and fourth units 13 and 14. The third unit consists of a detecting member/a needle 13a which senses the contour of the rotating model 12. The fourth unit supports a cutter or another tool for shaping the blank secured on the unit 11.

The first and second pairs of units are designed so as to be longitudinally displaceable in their longitudinal directions towards and away from each other. In the known machine these movements, here called the first longitudinal displacement movements, are the same size for the units in each pair. According to the present modification, the units in each pair of units will moreover be mutually displaceable in such a way that, during copying, the one unit has a second displacement movement or additional movement besides the first displacement movement. The said second displacement movement or additional movement gives the linear enlargement in the copying. The units 10, 11 in the first pair effect the enlargement in the longitudinal direction of the model, and the units 13, 14 in the second pair effect the enlargement in the radial direction of the model. In the exemplary embodiment the unit 10 is displaceable relative to the unit 11, and the unit 14 is displaceable relative to the unit 13.

In the case shown, the additional movements are obtained by means of a first linkage system 15 for the units of the first pair and a second linkage system 16 for the units of the second pair. Each linkage system is designed in such a way that the percentage degree of enlargement is adjustable in each case.

The first linkage comprises link arms 15a and 15b. Link arm 15a is rotatably mounted at a point 15c, and the link arms are mounted rotatable with respect to each other at a point 15d. The link arm 15b extends across the parallel units 10, 11 to a bracket 17 which follows the first longitudinal displacement movement of the unit 10. The movement of the bracket is transferred to the end of the link arm 15b, and the link arm 15b in turn transmits its movement to the unit 10 which is mounted displaceable relative to the unit 11 in a manner not shown specially. The transfer to the unit 10 takes place at a point 18. Two distances A and B are shown. A is identical to the distance between the bearing point 15d and a point 19 at which transmission of the movement of the bracket to the link arm 15b takes place. B is the distance between the bearing point 15d and the working point 18. The additional movement of the unit 11 relative to the unit 10 is determined by the relationship A/B. The movement of the unit 10 relative to the unit 11 is braked by means of the linkage system. The point 19 is arranged displaceable in the longitudinal direction of the link arm 15b so that variation of the distance A can be achieved.

The second linkage system 16 comprises a link arm 20 which extends across the parallel units 13 and 14. Link arms 21 and 22 are also included. The member 13a in the unit 13 is longitudinally displaceable in the body of the unit, where it acts on a similarly longitudinally displaceable servo piston 13b. The latter supports a bearing part 13c for the unit 14 which comprises a spindle housing 14a firmly attached to the bearing part 13c. The spindle housing bears a sleeve which is fixed relative to the spindle housing in the rotational direction, but is longitudinally displaceable relative to the spindle housing. A spindle 14b which supports a tool 14c is rotatably mounted in the sleeve but is fixed with respect to the latter in the direction of longitudinal displacement.

The links 20, 21 and 22 are allocated screws or bearing points 23, 24, 25, 27 and 28. Screw 24 is mounted in link 21 and screwed securely in link 20. Screw 25 is mounted in link 21 but is screwed securely at 13c. Screw 28 is mounted in link 22 and is screwed securely in link 20. The screw 28 can be screwed securely at any chosen position in the groove 30 in link 20. The screw 27 is mounted in the link 22 and is screwed securely in a unit 26 which is clamped securely on the abovementioned sleeve. The movement from the member 13a thus passes along the trajectory shown by arrows P.

When 13c moves a certain distance, the point 24 also moves. The link 20 then moves a certain defined angular distance about the bearing 23. The point 28 then moves a distance which is C/D greater than the distance which 24 moves. The enlargement f is thus C/D. The setting of the enlargement is obtained by tightening the screw 28 at a chosen position.

The additional movements for each unit in each pair of units can be effected by using members effecting additional movements other than the mechanically operated linkage system, for example electric motors, hydraulic cylinders, etc.

The invention is not limited to the embodiment shown above by way of example, but can instead be subject to modifications within the scope of the following patent claims.

## Claims

1. Method for producing a unit (7) which consists of ceramic material and is designed to replace lost substance or tissue in the human body, in which respect the contour of the unit is transferred from a used preparation model (1) having the contour of the unit (7) to be produced, said method comprising the steps that both said preparation model (3) and a blank from which a tool part (4) is made are positioned in a copying machine having a detecting member (13a) for sensing the contour (2) of the model and transferring said contour (2) in a linearly enlarged state (2') to said blank, that said tool part (4) is formed in said copying machine from the blank, which tool part has a contour corresponding to said linearly enlarged contour (2'), that a ceramic starting material is applied and compacted on said linearly enlarged contour (2'), and in that the unit (7) produced in this way is removed and treated in one or more sintering procedures in which it is subjected to linear shrinkage until the contour (2") defined by the tool part has essentially the same size as the model contour (2).

2. Method according to Patent Claim 1, characterized in that a mould cavity (5) is formed by means of the tool part (4) with the enlarged contour (2'), and in that the ceramic starting material is applied in the mould cavity.

3. Method according to Patent Claim 1 or 2, characterized in that , after removing the article from the press tool part (4), but before the said sintering, hereinafter referred to as the final sintering, the unit is presintered.

4. Method according to Patent Claim 3, characterized in that, after the presintering, the unit is given a desired outer shape, for example by manual grinding.

5. Method according to Patent Claim 1, 2, 3, or 4, characterized in that, after the said final sintering, the unit is individualized by means of applying porcelain on the unit and firing it to the desired outer contour and colour.

6. Method according to any one of Patent Claim 3-5, characterized in that the model contour in question is enlarged by between 16-25%, preferably about 20%, and in that corresponding shrinking is carried out in the final sintering procedure.

7. Method according to any one of Patent Claim 1-6, characterized in that the ceramic material applied in the mould cavity is pressed isostatically or automatically at a high compressive force, for example about 2000 MPa.

8. Method according to any one of Patent Claim 1-7, characterized in that the pre-sintering is carried out at a temperature of between 800-1300°C.

9. Method according to any one of Patent Claims 2-8, characterized in that the final sintering is carried out at a temperature of 1100-1600°C.

## Patentansprüche

1. Verfahren zur Herstellung einer Einheit (7) aus keramischem Material für den Ersatz von verlorener Substanz oder Gewebe im menschlichen Körper, bei dem die Kontur der Einheit von einem dazu verwendeten Ausgangsmodell (1), das die Kontur der herzustellenden Einheit (7) aufweist, überragen wird, wobei das Verfahren die Schritte aufweist, daß das Ausgangsmodell (3) und ein Rohling, aus dem ein Werkzeugteil (4) herzustellen ist, in eine Kopiermaschine eingesetzt werden, die ein Detektorelement (13a) zum Erfassen der Kontur (2) des Modells und zum Übertragen der Kontur (2) in linearer Vergrößerung (2') auf den Rohling aufweist, daß das Werkzeugteil (4) in der Kopiermaschine aus dem Rohling gefertigt wird, wobei das Werkzeugteil eine der linear vergrößerten Kontur (2') entsprechende Kontur aufweist, daß ein keramischer Werkstoff auf die linear vergrößerte Kontur (2') aufgebracht und verdichtet wird, und daß die auf diese Weise hergestellte Einheit (7) abgenommen und in einem oder mehreren Sintervorgängen behandelt wird, bei denen sie einer linearen Schrumpfung unterliegt, bis die von dem Werkzeugteil definierte Kontur (2") im wesentlichen die gleiche Größe wie die Modellkontur (2) hat.

2. Verfahren nach Anspruch 1,
dadurch **gekennzeichnet,** daß ein Formhohlraum (5) mittels des Werkzeugteils (4) mit der vergrößerten Kontur (2") gebildet wird und daß der keramische Werkstoff in den Formhohlraum eingebracht wird.

3. Verfahren nach Anspruch 1 oder 2,
dadurch **gekennzeichnet,** daß nach dem Entnehmen des Artikels aus dem Preßwerkzeugteil (4), aber vor dem nachstehend als Endsintern bezeichneten Sintervorgang, die Einheit vorgesintert wird.

4. Verfahren nach Anspruch 3,
dadurch **gekennzeichnet,** daß der Einheit nach dem Vorsintern eine gewünschte äußere Form, beispielsweise durch Schleifen von Hand, gegeben wird.

5. Verfahren nach Anspruch 1, 2, 3 oder 4,
dadurch **gekennzeichnet,** daß nach dem Endsintern die Einheit individualisiert wird durch Aufbringen von Porzellan auf die Einheit und Brennen, um die gewünschte Außenkontur und Farbe zu erhalten.

6. Verfahren nach einem der Ansprüche 3 bis 5,
dadurch **gekennzeichnet,** daß die Modellkontur zwischen 16-25%, vorzugsweise um etwa 20% vergrößert wird, und daß die entsprechende Schrumpfung in dem Endsinterungsvorgang durchgeführt wird.

7. Verfahren nach einem der Ansprüche 1 bis 6,
dadurch **gekennzeichnet,** daß das in den Formhohlraum eingebrachte keramische Material isostatisch oder automatisch mit hoher Kompressionskraft, z.B. 2000 MPa, gepreßt wird.

8. Verfahren nach einem der Ansprüche 1 bis 7,
dadurch **gekennzeichnet,** daß das Vorsintern für eine Temperatur zwischen 800-1300°C durchgeführt wird.

9. Verfahren nach einem der Ansprüche 2 bis 8,
dadurch **gekennzeichnet,** daß das Endsintern bei einer Temperatur von 1100-1600°C durchgeführt wird.


**Revendications**

1. Procédé de fabrication d'un bloc (7) qui est formé d'un matériau céramique et qui est destiné à remplacer un tissu ou une substance manquante dans le corps humain, le profil du bloc étant transféré d'un modèle de préparation (1) utilisé ayant le profil du bloc (7) à fabriquer, le procédé comprenant des étapes dans lesquelles le modèle de préparation (3) et une ébauche à partir de laquelle est réalisée une partie d'outil (4) sont placés dans une machine de reproduction ayant un organe détecteur (13a) du profil (2) du modèle et qui transfère le profil (2) à un état agrandi linéairement (2') à l'ébauche, la partie d'outil (4) est formée dans la machine de reproduction à partir de l'ébauche, la partie d'outil ayant un profil correspondant au profil linéairement agrandi (2'), une matière céramique initiale est appliquée et comprimée sur le profil linéairement agrandi (2'), et le bloc (7) produit de cette manière est retiré et traité dans une ou plusieurs opérations de frittage dans lesquelles il subit un retrait linéaire jusqu'à ce le profil (2'') de la partie d'outil ait pratiquement la même dimension que le profil (2) du modèle.

2. Procédé selon la revendication 1, caractérisé en ce qu'une cavité (5) de moulage est formée à l'aide de la partie d'outil (4) avec un profil agrandi (2'), et la matière céramique initiale est appliquée dans la cavité du moule.

3. Procédé selon la revendication 1 ou 2, caractérisé en ce que, après enlèvement de l'article de la partie (4) d'outil de pressage mais avant frittage (appelé dans la suite "frittage final"), le bloc subit un frittage préalable.

4. Procédé selon la revendication 3, caractérisé en ce que, après le frittage préalable, le bloc est mis à la configuration externe voulue, par exemple par polissage manuel.

5. Procédé selon la revendication 1, 2, 3 ou 4, caractérisé en ce que, après le frittage final, le bloc est individualisé par application d'une porcelaine à l'ensemble et cuisson au profil externe et à la couleur voulus.

6. Procédé selon l'une quelconque des revendications 3 à 5, caractérisé en ce que le profil du modèle concerné est agrandi d'un facteur compris entre 16 et 25 % et de préférence d'environ 20 %, et en ce que le retrait correspondant est résulte de l'opération de frittage final.

7. Procédé selon l'une quelconque des revendications 1 à 6, caractérisé en ce que la matière céramique appliquée dans la cavité de moulage subit un pressage isostatique ou automatique avec une compression élevée, par exemple d'environ 2 000 MPa.

8. Procédé selon l'une quelconque des revendications 1 à 7, caractérisé en ce que le frittage préalable est exécuté à une température comprise entre 800 et 1 300 °C.

9. Procédé selon l'une quelconque des revendications 2 à 8, caractérisé en ce que le frittage final est réalisé à une température comprise entre 1 100 et 1 600 °C.

Fig.1

Fig.2

Fig.3

Fig.4

Fig.5